# EUROPEAN PATENT SPECIFICATION

(11) **EP 2 123 451 B1**
(45) Date of publication and mention of the grant of the patent: **09.03.2011**
(21) Application number: 07860346.1
(22) Date of filing: 27.12.2007
(51) Int. Cl.: B32B 27/28, B32B 27/32

(54) **MULTILAYER STRUCTURE AND METHOD FOR MANUFACTURING THE SAME**
MEHRLAGIGE STRUKTUR UND VERFAHREN ZU DESSEN HERSTELLUNG
STRUCTURE MULTICOUCHES ET SON PROCÉDÉ DE FABRICATION

(30) Priority: 28.12.2006 JP 2006355697
(43) Date of publication of application: 25.11.2009
(73) Proprietor: KURARAY CO., LTD., Kurashiki-shi Okayama 710-0801 (JP)
(72) Inventor: IGARASHI, Takeyuki, Kurashiki-shi Okayama 713-8550 (JP); MURATA, Tomonori, Kurashiki-shi Okayama 713-8550 (JP); WATANABE, Tomoyuki, Kurashiki-shi Okayama 713-8550 (JP)
(74) Representative: Perrey, Ralf
(86) International application number: PCT/JP2007/075124
(87) International publication number: WO 2008/081867

(56) References cited:
- EP-A2- 0 592 240
- JP-A- 06 238 841
- JP-A- 07 329 252
- JP-A- 2002 225 202
- JP-A- 2002 308 932
- US-A- 3 291 861

## Description

The present invention relates to a multilayer structure having a layer of a polypropylene and a layer of an ethylene-vinyl alcohol copolymer laminated to each other via a layer of an adhesive resin composition, and to a method for producing such multilayer structure.

### BACKGROUND ART

Ethylene-vinyl alcohol copolymers (hereinafter, may be abbreviated as EVOH) are excellent in, for example, barrier properties, oil resistance, and aroma retention properties and therefore have been used in various applications. However, EVOH is a resin poor in flexibility and the barrier properties deteriorate when absorbing moisture, so that is often used with polyolefins in lamination. Since polypropylenes are excellent in water resistance and heat resistance in particular, they have been widely used with EVOH in lamination.

However, because the adhesion of EVOH to polypropylenes is poor, it is necessary to form an adhesive layer between both layers. As such an adhesive, polypropylenes modified with maleic anhydride are widely used. For example, Patent Document 1 discloses a multilayer structure in which a resin composition containing a modified propylene copolymer modified with an unsaturated carboxylic acid or anhydride thereof and a non-modified polypropylene is used as an adhesive to adhere a polypropylene and an EVOH. In this manner, EVOH and polypropylenes are often adhered to each other using a polypropylene-based resin composition modified with an unsaturated carboxylic acids or anhydride thereof. However, such a resin modified with an unsaturated carboxylic acid or anhydride thereof is easily colored due to the heat during the melt-molding, so that it has been a problem in applications where the appearance is an important issue, such as food wrapping containers. Moreover, the adhesion may be insufficient depending on the brand of EVOH, and in some cases, the interlayer adhesion strength after coextrusion could change over time.

In contrast, since resins containing functional groups of at least one kind selected from the group consisting of a boronic acid group and boron-containing groups each capable of being converted into a boronic acid group in the presence of water have a very high reactivity with EVOH, they have good adhesion to EVOH when used as an adhesive. Furthermore, it is possible to obtain a multilayer structure that is not easily colored during melt-molding and excellent in the appearance. For example, Patent Document 2 discloses a multilayer structure produced by laminating an EVOH layer and a polyolefin layer via a layer of an adhesive. As the adhesive, a resin composition containing a styrene-hydrogenated diene block copolymer, namely a hydrogenation product of a styrene-diene block copolymer, containing in its side chain at least one functional group selected from the group consisting of a boronic acid group and boron-containing groups each capable of being converted into a boronic acid group in the presence of water and a polyolefin is used, and it is shown that such a multilayer structure has good interlayer adhesion strength. Since such a resin containing functional groups of at least one kind selected from the group consisting of a boronic acid group and boron-containing groups each capable of being converted into a boronic acid group in the presence of water is expensive, it is preferable, from an economical perspective, to use it as an adhesive resin composition by mixing it with an inexpensive polyolefin.

The adhesive resin composition used in Patent Document 2 can be produced by melt-kneading the polyolefin and the hydrogenation product of the styrene-diene block copolymer. In this procedure, the type of the polyolefin to be mixed is described to be usually preferred to conform the layer of the polyolefin to be laminated to the layer of the EVOH. In fact, in Examples in Patent Document 2, the layer of the adhesive resin composition containing the linear low-density polyethylene and the hydrogenation product of the styrene-diene block copolymer is laminated to a layer of a linear low-density polyethylene, and the layer of the adhesive resin composition containing the polypropylene and the hydrogenation product of the styrene-diene block copolymer is laminated to a layer of a polypropylene.

Multilayer structures produced by laminating a layer of a polypropylene and a layer of EVOH via a layer of an adhesive resin composition are obtained by melt-molding and then often subjected further to secondary processing. They are often subjected to, for example, uniaxially or biaxially stretching, thermoforming, and blow forming. However, the interlayer adhesion strength often deteriorates due to the deformation and the like generated during the secondary processing, so that there has been a demand for alleviation.

[Patent Document 1] JP 2-245042A
[Patent Document 2] WO 02/060961

### DISCLOSURE OF THE INVENTION

### PROBLEM TO BE SOLVED BY THE INVENTION

The present invention was made in order to solve the aforementioned problems. An object of the present invention is to provide a multilayer structure having a layer of a polypropylene and a layer of an EVOH and having good interlayer adhesion strength.

### MEANS FOR SOLVING THE PROBLEM

The aforementioned problems are solved by providing a multilayer structure comprising a layer of a polypropylene (A) and a layer of an ethylene-vinyl alcohol copolymer (B) laminated to each other via a layer of an adhesive resin composition (C), wherein the adhesive resin composition (C) contains a thermoplastic resin (c1), having functional groups of at least one kind selected from the group consisting of a boronic acid group and boron-containing groups capable of being converted into a boronic acid group in the presence of water, and an ethylene-α-olefin copolymer (c2), having a density of 0.925 g/cm³ or less and not having the functional groups.

In this embodiment, it is preferable that the functional groups contained in the thermoplastic resin (c1) are cyclic boronate ester groups, and also preferable that the thermoplastic resin (c1) is a styrene-hydrogenated diene block copolymer, namely a hydrogenation product of a styrene-diene block copolymer. It is also preferable that the thermoplastic resin (c1) is contained 1 to 20 parts by mass in terms of 100 parts by mass of the ethylene-α-olefin copolymer (c2). Preferred embodiments of the multilayer structure are shaped articles of secondary processing, particularly stretched films and thermoformed articles.

The aforementioned problems are solved also by providing a method for producing the multilayer structure, the method comprising coextruding or coinjecting the polypropylene (A), the ethylene-vinyl alcohol copolymer (B), and the adhesive resin composition (C), and then performing secondary processing at a temperature of a melting point of the ethylene-α-olefin copolymer (c2) or higher.

### EFFECT OF THE INVENTION

Multilayer structures of the present invention have a layer of a polypropylene and a layer of an EVOH, and have good adhesion between both layers. The multilayer structures can maintain good adhesion strength even after subjected to secondary processing.

### BEST MODE FOR CARRYING OUT THE INVENTION

The multilayer structures of the present invention have a layer of a polypropylene (A) and a layer of an ethylene-vinyl alcohol copolymer (B) laminated to each other via a layer of an adhesive resin composition (C). Here, the adhesive resin composition (C) is a product obtained by melt-kneading a thermoplastic resin (c1) having special functional groups and an ethylene-α-olefin copolymer (c2), which is a type of ethylene-based polymers. Polypropylene-based polymers are usually used as an adhesive resin composition to adhere to the layer of the polypropylene (A), whereas in the present invention, ethylene-α-olefin copolymers (c2) having a specific density or less are used. It is surprising that this enables to obtain a better adhesive performance than that in a case of using the polypropylene-based polymers. Moreover, it is more surprising that good adhesion strength is maintained even after secondary processing. The present invention is described in detail below.

First, the adhesive resin composition (C) is described. The adhesive resin composition (C) of the present invention contains the thermoplastic resin (c1), having functional groups of at least one kind selected from the group consisting of a boronic acid group and boron-containing groups capable of being converted into a boronic acid group in the presence of water, and the ethylene-α-olefin copolymer (c2), having a density of 0.925 g/cm³ or less and not having the functional groups.

The thermoplastic resin (c1) is characterized by having functional groups of at least one kind selected from the group consisting of a boronic acid group and boron-containing groups capable of being converted into a boronic acid group in the presence of water. Among the boron-containing functional groups, the boronic acid group is a group represented by the following formula (I).

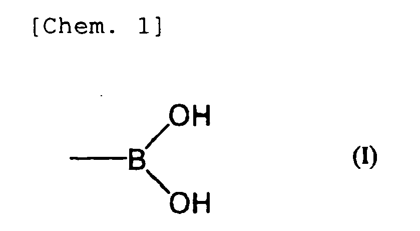

The boron-containing group capable of being converted into a boronic acid group in the presence of water indicates a boron-containing group that can be hydrolyzed in the presence of water to be converted into a boronic acid group represented by the above formula (I). More specifically, the above boron-containing group means a functional group capable of being converted into a boronic acid group when being hydrolyzed under conditions of from room temperature to 150°C for from 10 minutes to 2 hours by use, as a solvent, of water only, a mixture of water and an organic solvent (e.g., toluene, xylene and acetone), a mixture of a 5% aqueous boric acid solution and the above described organic solvent, or the like. Representative examples of such functional groups include boronic ester groups represented by the following formula (II), boronic anhydride groups represented by the following formula (III), and boronic acid salt groups represented by the following formula (IV):

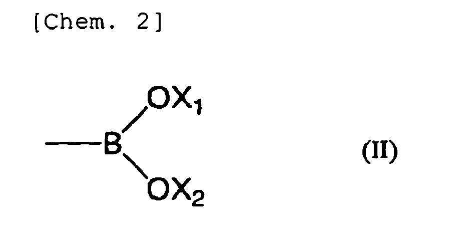

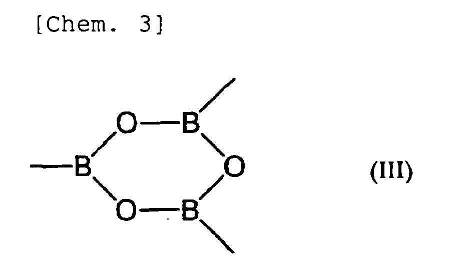

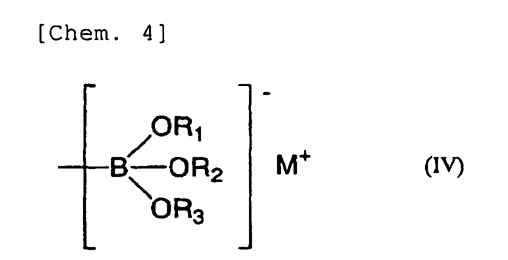

wherein X₁ and X₂ are the same or different and each represent a hydrogen atom, an aliphatic hydrocarbon group (e. g. , a linear or branched alkyl or alkenyl group having from 1 to 20 carbon atoms), an alicyclic hydrocarbon group (e.g., a cycloalkyl group and a cycloalkenyl group), or an aromatic hydrocarbon group (e.g., a phenyl group and a biphenyl group), where the aliphatic hydrocarbon group, the alicyclic hydrocarbon group and the aromatic hydrocarbon group may have a substituent, X₁ and X₂ may be combined together, provided that in no cases both X₁ and X₂ are hydrogen atoms; R₁, R₂ and R₃ each represent a hydrogen atom, an aliphatic hydrocarbon group, an alicyclic hydrocarbon group or an aromatic hydrocarbon group like X₁ and X₂ mentioned above, and M represents alkali metal.

Specific examples of the boronic ester group represented by general formula (II) include dimethyl boronate group, diethyl boronate group, dipropyl boronate group, diisopropyl boronate group, dibutyl boronate group, dihexyl boronate group, dicyclohexyl boronate group, ethylene glycol boronate group, propylene glycol boronate group, 1,3-propanediol boronate group, 1,3-butanediol boronate group, neopentyl glycol boronate group, catechol boronate group, glycerin boronate group, trimethylolethane boronate group, trimethylolpropane boronate group, diethanolamine boronate group, and the like.

The boronic acid salt groups represented by the general formula (IV) may be alkali metal boronate groups, etc. Specific examples include sodium boronate group, potassium boronate group, and the like.

Among such boron-containing functional groups, cyclic boronate ester groups are preferred in view of thermal stability. Examples of the cyclic boronate ester groups include 5-membered or 6-membered ring-containing cyclic boronate ester groups. Specific examples include ethylene glycol boronate group, propylene glycol boronate group, 1,3-propanediol boronate group, 1,3-butanediol boronate group, glycerin boronate group, and the like.

The thermoplastic resin (c1) may contain only one kind of or two or more kinds of boron-containing functional groups. The amount of the boron-containing functional groups is preferably from 0.0001 to 0.002 equivalents per gram of the thermoplastic resin (c1), namely from 100 to 2000 µeq/g, and more preferably from 150 to 1500 µeq/g. When the amount of the functional groups is less than 100 µeq/g, the interlayer adhesion strength of the resulting multilayer structure may deteriorate. When the amount of the functional groups exceeds 2000 µeq/g, gelation may easily occurs and the appearance of the resulting multilayer structure may deteriorate.

Although the bonding form of the boron-containing functional groups contained in the thermoplastic resin (c1) used in the present invention is not particularly restricted and the boron-containing functional groups may be contained at side chains and terminals, the boron-containing functional groups are preferably contained as side chains of the polymer. It is easy to obtain a large content of boron-containing functional groups when they are contained as side chains. When the boron-containing functional groups are bonded only to terminals of a polymer, the amount of the functional groups becomes relatively low particularly in a polymer of high molecular weight, and the reactivity of the thermoplastic resin (c1) may become insufficient.

Specific examples of the thermoplastic resin (c1) include polyolefins such as polyethylene (very low density, low density, middle density, high density), ethylene-vinyl acetate copolymers, ethylene-acrylic ester copolymers, polypropylene, ethylene-propylene copolymers and copolymers of ethylene with an α-olefin such as 1-butene, isobutene, 3-methylpentene, 1-hexene and 1-octene; products resulting from graft modification of the aforementioned polyolefins with maleic anhydride, glycidyl methacrylate and the like; styrene resins such as polystyrene and styrene-acrylonitrile copolymers; styrene-diene block copolymers, such as styrene-butadiene diblock copolymers, styrene-isoprene diblock copolymers, styrene-butadiene-styrene triblock copolymers and styrene-isoprene-styrene triblock copolymers, or hydrogenation products thereof ; (meth)acrylic ester resins such as poly (methyl acrylate), poly (ethyl acrylate) and poly (methyl methacrylate); vinyl halide-based resins such as poly (vinyl chloride) and vinylidene fluoride; semiaromatic polyesters such as poly (ethylene terephthalate) and poly (butylene terephthalate); and aliphatic polyesters such as polyvalerolactone, polycaprolactone, poly (ethylene succinate) and poly (butylene succinate). These may be used singly or in combination of two or more kinds. Among these, polyolefins and styrene-diene block copolymers or hydrogenation products thereof are preferred, and hydrogenation products of styrene-diene block copolymers are particularly preferred.

When the thermoplastic resin (c1) is a hydrogenation product of a styrene-diene block copolymer, the mass ratio of styrene units to diene units contained in the copolymer is preferably from 5/95 to 70/30 as the mass ratio before hydrogenation, and more preferably from 10/90 to 50/50. When the mass ratio is within such ranges, the compatibility of the thermoplastic resin (c1) with the ethylene-α-olefin copolymer (c2) becomes good. When particularly high interlayer adhesion strength is desired, a smaller content of styrene units is preferred. Specifically, the mass ratio of styrene units to diene units is preferably 30/70 or less.

The melt flow rate (MFR) (at 190°C, under a load of 2160 g) of the thermoplastic resin (c1) is preferably from 0.2 to 50 g/10 min. When the melt flow rate is included in this range, the dispersion of the thermoplastic resin (c1) in the adhesive resin composition (C) becomes good. The melt flow rate is more preferably 0.5 g/10 min or more. The melt flow rate is more preferably 30 g/10 min or less.

The thermoplastic resin (c1) used for the present invention can be produced by a method described in Patent Document 2 (WO 02/060961).

Subsequently, the ethylene-α-olefin copolymer (c2) is described. The ethylene-α-olefin copolymer (c2) used in the present invention is an ethylene-α-olefin copolymer that has a density of 0.925 g/cm³ or less and does not have functional groups of at least one kind selected from the group consisting of a boronic acid group and boron-containing groups capable of being converted into a boronic acid group in the presence of water, and the copolymer typically contains 50 mass% or more of ethylene units.

Although the α-olefin to be copolymerized with the ethylene here is not particularly limited, the α-olefin typically has 20 or less carbon atoms. α-olefins having carbon atoms from 4 to 8 are preferably used. Specific examples include propylene, 1-butene, 1-hexene, 4-methyl-1-pentene, 3,3-dimethyl-1-butene, and 1-octene. Among all, α-olefins having 6 carbon atoms, particularly 1-hexene and 4-methyl-1-pentene are preferred. The ethylene-α-olefin copolymer (c2) may be a product of polymerization using a Ziegler catalyst or polymerization using a metallocene catalyst. The ethylene-α-olefin copolymer (c2) may be used singly or in combination of two or more kinds.

It is important that the ethylene-α-olefin copolymer (c2) has a density of 0.925 g/cm³ or less. A good adhesive performance can be obtained by using the ethylene-α-olefin copolymer (c2) having such density. In a case that the ethylene-α-olefin copolymer (c2) is in combination of two or more kinds, the sum total of the products of the density and the blending ratio of each may be 0.925 or less. The density is preferably 0.92 g/cm³ or less, more preferably 0.915 g/cm³ or less, and even more preferably 0.91 g/cm³ or less. On the other hand, although the lower limit of the density of the ethylene-α-olefin copolymer (c2) is not particularly limited, it is typically 0.85 g/cm³ or more. Considering the ease of handling, heat resistance, costs, and the like, the density is preferably 0.87 g/cm³ or more, and more preferably 0.88 g/cm³ or more. The ethylene-α-olefin copolymer, which has a density of roughly from 0.88 g/cm³ to 0.925 g/cm³, is commercially available as so-called linear low-density polyethylene (LLDPE).

The melt flow rate (MFR) (at 190°C under a load of 2160 g) of the ethylene-α-olefin copolymer (c2) is preferably from 0.2 to 70 g/10 min. When the melt flow rate is included in this range, the dispersion of the thermoplastic resin (c1) in the adhesive resin composition (C) becomes good. The melt flow rate is more preferably 0.5 g/10 min or more. The melt flow rate is more preferably 50 g/10 min or less.

Although the blending ratio of the thermoplastic resin (c1) to the ethylene-α-olefin copolymer (c2) in the adhesive resin composition (C) used in the present invention is not particularly limited, it is preferable to contain from 1 to 20 parts by mass of the thermoplastic resin (c1) in terms of 100 parts by mass of the ethylene-α-olefin copolymer (c2). In a case that the thermoplastic resin (c1) is blended less than 1 part by mass, the adhesion strength tends to deteriorate. The thermoplastic resin (c1) is blended more preferably 2 parts by mass or more, and even more preferably 3 parts by mass or more. On the other hand, in a case that the thermoplastic resin (c1) is blended greater than 20 parts by mass, unevenness tends to occur in the appearance of the resulting multilayer structure, and leads to increase in costs. The thermoplastic resin (c1) is blended more preferably 12 parts by mass or less, and even more preferably 8 parts by mass or less.

In terms of 100 parts by mass as the total mass of the adhesive resin composition (C), the content of the ethylene-α-olefin copolymer (c2) is typically 50 parts by mass or more, preferably 80 parts by mass or more, more preferably 85 parts by mass or more, and even more preferably 92 parts by mass or more.

To the adhesive resin composition (C), antioxidants, plasticizers, heat stabilizers, UV absorbers, antistatic agents, lubricants, colorants, fillers or other resins may be blended, unless the effect of the present invention is inhibited.

The adhesive resin composition (C) is obtained by, for example, dry blending for mixing the thermoplastic resin (c1) and the ethylene-α-olefin copolymer (c2) and then melt-kneading. It is possible to use, for melt-kneading, ribbon blenders, high speed mixers, co-kneaders, pelletizers, mixing rolls, extruders, intensive mixers, and the like. Among these, single-screw or twin-screw extruders are preferably used in view of simple procedures and costs. Although the temperature for melt-kneading is selected as appropriate depending on, for example, the properties of the instrument and the types and blending ratios of the thermoplastic resin (c1) and the ethylene-α-olefin copolymer (c2), it often falls in a range of from 150 to 300°C. In the case of the present invention, it is preferred to shape a multilayer structure by melt-kneading the thermoplastic resin (c1) and the ethylene-α-olefin copolymer (c2) using an extruder provided with the shaping machine, producing the adhesive resin composition (C), and subsequently, using it immediately.

The polypropylene (A) used in the present invention is a polymer having propylene as a major constitutional unit and typically containing 50 mass% or more of propylene units. Other than propylene homopolymers, copolymers also may be used that contain a small amount of monomer units, such as ethylene, α-olefin, and the like. The polypropylene (A) does not have functional groups of at least one kind selected from the group consisting of a boronic acid group and boron-containing groups capable of being converted into a boronic acid group in the presence of water. The polypropylene (A) also may be a mixture of two or more kinds of polypropylene.

To the polypropylene (A), other resins may also be blended, unless the effect of the present invention is inhibited. For example, it is possible to adjust mechanical properties of shaped articles by blending a small amount of polyethylene. As in the case of so-called HIPS (high impact polystyrene), it is also possible to improve impact resistance by blending rubber components. It is further possible to use, for example, recovered resin compositions obtained by melt-kneading scraps of a multilayer structure including a layer of a polypropylene. The content of the polypropylene (A) in such cases is typically 50 mass% or more. Further, fillers and various additives may also be blended to the polypropylene (A), unless the effect of the present invention is inhibited.

Although the melting point of the polypropylene (A) can be appropriately set in accordance with the shaping method in the present invention, it is typically preferred to be from 115 to 190°C. It is more preferably at 120°C or higher. In recent years, the use of a metallocene catalyst enables to obtain polypropylenes having a melting point lower than that of polypropylenes obtained with a Ziegler catalyst, and they are commercially available. The melt flow rate (MFR) (at 230°C under a load of 2160 g) of the polypropylene (A) is preferably from 0.2 to 70 g/10 min. The melt flow rate can be appropriately set in accordance with the shaping method as in the case of the melting point, preferably from 4 to 70 g/10 min for injection molding, from 0.2 to 50 g/10 min for blow molding and extrusion, from 2 to 40 g/10 min for lamination. When the melt flow rate greatly differs from that of the adhesive resin composition (C) used in an adjacent layer, defects in appearance tends to occur when producing a multilayer structure of the present invention, and therefore, the melt flow rate is more preferably from 0.3 to 60 g/10 min and even more preferably from 0.5 to 50 g/10 min. The aforementioned appearance defects are considered to be caused by roughness generated in the interface in a case that the difference of the melt flow rates is large when individual molten resins of the polypropylene (A) and the adhesive resin composition (C) are merged together in the production of a multilayer structure.

The ethylene-vinyl alcohol copolymer (B) used in the present invention can be produced by a known method including copolymerizing ethylene and a vinyl ester using a radical initiator and then saponifying the resulting copolymer in the presence of an alkaline catalyst. Examples of the vinyl ester include vinyl acetate, vinyl propionate, vinyl pivalate, vinyl caprate, vinyl benzoate, and the like. Among such vinyl esters, only one ester may be used and two or more esters may also be used in combination. Among these, vinyl acetate is preferred.

Unless the object of the present invention is inhibited, copolymerization may also be performed in the presence of other copolymerizable components. Such other components include olefin-based monomers such as propylene, 1-butene and isobutene; acrylamide-based monomers such as acrylamide, N-methylacrylamide, N-ethylacrylamide and N,N-dimethylacrylamide; methacrylamide-based monomers such as methacrylamide, N-methylmethacrylamide, N-ethylacrylamide and N,N-dimethylmethacrylamide; vinyl ether-based monomers such as methyl vinyl ether, ethyl vinyl ether, n-propyl vinyl ether, isopropyl vinyl ether, tert-butyl vinyl ether and dodecyl vinyl ether; allyl alcohol; vinyltrimetoxysilane; N-vinyl-2-pyrrolidone; and the like. It should be noted that such other components does not have functional groups of at least one kind selected from the group consisting of a boronic acid group and boron-containing groups capable of being converted into a boronic acid group in the presence of water.

Although the ethylene content of the ethylene-vinyl alcohol copolymer (B) is not particularly limited, it is preferably from 5 to 60 mol%. When the ethylene content is less than 5 mol%, the melt stability may become insufficient. The ethylene content is more preferably 15 mol% or more, and even more preferably 20 mol% or more. On the other hand, when the ethylene content exceeds 60 mol%, the barrier properties may become insufficient. The ethylene content is more preferably 55 mol% or less, and even more preferably 50 mol% or less. The saponification degree of the ethylene-vinyl alcohol copolymer (B) is usually from 80 to 100 mol%, preferably from 90 to 100 mol%, more preferably from 95 to 100 mol%, even more preferably from 98 to 100 mol%, and most preferably from 99 to 100 mol%. When the saponification degree is lower than 80 mol%, the barrier properties of the ethylene-vinyl alcohol copolymer (B) may become insufficient or the thermal stability during melt-shaping may become insufficient.

The melt flow rate (MFR) (at 190°C under a load of 2160 g) of the ethylene-vinyl alcohol copolymer (B) is preferably from 0.5 to 16 g/10 min, more preferably from 0.3 to 14 g/10 min, and even more preferably from 0.5 to 12 g/10 min. However, for the EVOH (B) having a melting point around 190°C or exceeding 190°C, a MFR is defined as a value obtained by measuring at a plurality of temperatures of the melting point or higher under a load of 2160 g and plotting the results with reciprocals of absolute temperatures as abscissa against logarithms of MFRs as ordinate in a semi-logarithmic graph for extrapolation to 190°C.

As a method for producing a multilayer structure of the present invention, it is possible to adopt a known method and to use a method such as coextruding, coinjecting, and extrusion coating. In view of versatility and adhesiveness, coextruding or coinjecting is preferred. When coextruding or coinjecting, it is possible to feed the polypropylene (A), the ethylene-vinyl alcohol copolymer (B), and the adhesive resin composition (C) each to a shaping machine. A preferable embodiment of the present invention is to produce the adhesive resin composition (C) by feeding a mixture of the thermoplastic resin (c1) and the ethylene-α-olefin copolymer (c2) to a shaping machine for the adhesive resin composition (C) in coextruding or coinjecting, and to subsequently produce the multilayer structure at the same time.

The layer constitution of the multilayer structure of the present invention is not particularly limited as long as a layer of the polypropylene (A) and a layer of the ethylene-vinyl alcohol copolymer (B) are laminated to each other via a layer of the adhesive resin composition (C). Examples of the layer constitution include A/C/B, A/C/B/C/A, A/C/B/C/A/T, A/C/B/T, A/C/B/C/T, and the like. Here, the A layer, the B layer, the C layer, and the T layer respectively represent a layer of the polypropylene (A), a layer of the ethylene-vinyl alcohol copolymer (B), a layer of the adhesive resin composition (C), a layer of metal foil, paper, cloth, a thermoplastic resin other than the polypropylene (A), the ethylene-vinyl alcohol copolymer (B), and the adhesive resin composition (C), or the like. The A layer may be constituted of a plurality of layers, and for example, a layer of a recovered resin composition containing a polypropylene as the major component and a layer of a brand-new polypropylene can each be referred to as the A layer. The thicknesses of the individual layers of the multilayer structure may optionally be selected. Such selection allows the total thickness of the multilayer structure to fall within a desired range.

The multilayer structure of the present invention has good interlayer adhesion. Good adhesion is exhibited in either interface of the interface between the layer of the adhesive resin composition (C) and the layer of the polypropylene (A) and the interface between the layer of the adhesive resin composition (C) and the layer of the ethylene-vinyl alcohol copolymer (B). When using a polypropylene instead of the ethylene-α-olefin copolymer (c2) in the adhesive resin composition (C), although the adhesion in the interface between the layer of the adhesive resin composition (C) and the layer of the polypropylene (A) is good, the adhesion in the interface between the layer of the adhesive resin composition (C) and the layer of the ethylene-vinyl alcohol copolymer (B) is insufficient.

Multilayer structures thus obtained by melt-shaping are often subjected further to secondary processing. The secondary processing means that a multilayer structure obtained by melt-shaping, such as coextruding or coinjecting, is further processed for shaping. Specific examples of such secondary processing include stretching processes such as uniaxially stretching, biaxial stretching and blow stretching, thermoforming processes such as vacuum forming, pressure forming, drape forming, and plug-assist forming, and the like. By carrying out such secondary processing using the multilayer structure of the present invention, it is possible to obtain a shaped article of secondary processing excellent in mechanical properties and gas barrier properties. The form of resulting shaped articles is varied, and it is possible to obtain shaped articles, such as films, sheets, bottles, cups, etc.

Among the shaped articles of secondary processing, stretched films and thermoformed articles are preferred embodiments. For the stretched films, biaxially stretched films are preferred and multilayer films stretched at 5 times or more, more preferably at a ratio as high as 8 times or more, as the area ratio are preferred embodiments. For the thermoformed articles, particularly shaped articles of deep drawing and specifically thermoformed articles having a depth (drawn ratio: S) relative to the diameter of the opening of 0.5 times or more, more preferably 0.7 times or more are preferred embodiments. In a case of this opening not being circular, the circle-equivalent diameter is defined as the diameter.

The secondary processing is preferably carried out at a temperature of the melting point of the ethylene-α-olefin copolymer (c2) or higher, and thereby the interlayer adhesion after the secondary processing becomes good. Although the reason for this is not quite clear, melting the ethylene-α-olefin copolymer (c2) in the adhesive resin composition (C) leads to either readhesion of the thermoplastic resin (c1) to the ethylene-vinyl alcohol copolymer (B) or alleviation of the interfacial displacement between the layer of the adhesive resin composition (C) and the layer of the ethylene-vinyl alcohol copolymer (B) and thereby, the deterioration of adhesion during the secondary processing appears to be suppressed. The temperature for the secondary processing is more preferably a temperature higher than the melting point of the ethylene-α-olefin copolymer (c2) by 5°C or more, and even more preferably a temperature higher than the melting point of the ethylene-α-olefin copolymer (c2) by 10°C or more. On the other hand, in order to keep good appearance of the surfaces on shaped articles, the secondary processing is preferably carried out at a temperature lower than the melting point of the polypropylene (A) . It is more preferably a temperature lower than the melting point of the polypropylene (A) by 5°C or more, and even more preferably a temperature lower than the melting point of the polypropylene (A) by 10°C or more. However, there are cases that the secondary shaping is possible even at a temperature of the melting point of the polypropylene (A) or higher as long as the temperature is lower than the melting point of the ethylene-vinyl alcohol copolymer (B), and in such cases, the upper limit of the preferred temperature for the secondary processing is a temperature higher than the melting point of the polypropylene (A) by 20°C.

The multilayer structures of the present invention are useful for applications where barrier properties are required such as materials for wrapping foods, materials for wrapping medical items (drugs and medical appliances) and fuel tanks. Example

The present invention will be described in more detail below by way of Examples and Comparative Examples.

### Synthesis Example 1

A hydrogenation product of a styrene-butadiene-styrene triblock copolymer (styrene/butadiene = 16/84 (mass ratio), hydrogenation percentage of butadiene units = 94%, amount of double bonds = 960 µeq/g, MFR (at 230°C, under a load of 2160 g) = 5 g/10 min) was fed to a twin-screw extruder at a rate of 7 kg/hr while ventilating the feed port with 1 L/min nitrogen. Subsequently, while feeding a mixed liquid of borane-triethylamine complex (TEAB) and boronic acid 1,3-butanediol ester (BBD) (TEAB/BBD = 29/71, mass ratio) from a liquid feeder 1 at a rate of 0. 6 kg/hr and 1, 3-butanediol from a liquid feeder 2 at a rate of 0.4 kg/hr, kneading was carried out continuously. During the kneading, the pressure was regulated so that the gauges at a vent 1 and a vent 2 indicated approximately 20 mmHg. As the result, a hydrogenation product of a styrene-butadiene-styrene triblock copolymer containing boronic acid 1, 3-butanediol ester groups (hereinafter referred to as a thermoplastic resin (c1)) was obtained as pellets from the discharge port at a rate of 7 kg/hr. The thermoplastic resin (c1) contained boronic acid 1,3-butanediol ester groups in an amount of 650 µeq/g and double bonds in an amount of 115 µeq/g, and had a MFR (at 190°C, under a load of 2160 g) of 1.6 g/10 min.

The constitution and operating conditions of the twin-screw extruder used for the reaction are as follows:
Co-rotating twin-screw extruder TEM-35B (manufactured by Toshiba Machine Co., Ltd.)
Screw diameter: 37 mmφ
L/D: 52 (15 blocks)
Liquid feeder: C3 (Liquid feeder 1), C11 (Liquid feeder 2)
Vent position: C6 (Vent 1), C14 (Vent 2)
Constitution of screw: Seal rings were used between C5 and C6, between C10 and C11, and at C12.
Cylinder setting temperature: C1 (water cooling), C2-C3 (200°C), C4-C15 (250°C), die (250°C)
Screw rotation speed: 400 rpm

### Example 1

Pellets of the thermoplastic resin (c1) obtained in Synthesis Example 1 and pellets of linear low-density polyethylene "ULTZEX 1020L" (trade name, an ethylene-4-methyl-1-pentene copolymer polymerized with a Ziegler catalyst, melting point = 115°C, MFR (at 190°C, under a load of 2160 g) = 2.0 g/10 min, density = 0.909 g/cm³; hereinafter referred to as (c2-1)) produced by Prime Polymer Co., Ltd. were dry-blended at (c1) / (c2-1) = 4/96 (mass ratio), yielding a mixture of both pellets.

Next, polypropylene "NOVATEC FY6C" (trade name, melting point = 168°C, MFR (at 230°C, under a load of 2160 g) = 2.4 g/10 min; hereinafter referred to as (A-1)) produced by Japan Polypropylene Corporation, the pellet mixture of (c1) / (c2-1), and "EVAL H171B" (trade name, an ethylene-vinyl alcohol copolymer, ethylene content = 38 mol%, melting point = 170°C, MFR (at 190°C, under a load of 2160 g) = 1.6 g/10 min, saponification degree = 99.8 mol% or more) produced by Kuraray Co., Ltd. were provided as raw materials and were introduced into separate extruders, respectively. Then, a 3-kind 5-layer multilayer film of polypropylene (A) / adhesive resin composition (C) / ethylene-vinyl alcohol copolymer (B) / adhesive resin composition (C) / polypropylene (A) was produced by coextrusion according to the conditions shown below. The thickness distribution of the resulting multilayer film was 50/10/10/10/50 µm.

The constitution and operating conditions of the coextrusion machine are as follows.

Extruder 1 [polypropylene (A): (A-1)]:
Instrument: single-screw extruder "GT-32-A type" manufactured by Research Laboratory of Plastic Technology Co., Ltd.
Screw diameter: 32 mmφ
Screw rotation speed: 62 rpm
temperature: 220°C
Extruder 2 [adhesive resin composition (C): pellet mixture of (c1) / (c2-1)]:
Instrument: single-screw extruder "P25-18AC" manufactured by Osaka Seiki Kosaku Kabushiki Kaisha,
Screw diameter: 25 mmφ
Screw constitution: fullflight
L/D: 18
Screw rotation speed: 30 rpm
Cylinder setting temperature: 220°C
Extruder 3 [ethylene-vinyl alcohol copolymer (B)]:
Instrument: single-screw extruder "Labo ME-type CO-NXT" manufactured by Toyo Seiki Seisaku-sho, Ltd.
Screw diameter: 20 mmφ
Screw rotation speed: 18 rpm
Cylinder setting temperature: 220°C
Die size: 300 mm
Film taking-off rate: 4 m/min
Temperature of cooling roll: 60°C

The T-type peel strength in the interface between the polypropylene (A) layer and the adhesive resin composition (C) layer and in the interface between the adhesive resin composition (C) layer and the ethylene-vinyl alcohol copolymer (B) layer of the resulting multilayer film immediately after the film production was measured with an Autograph (tensile speed = 250 mm/min) at 20°C and 65 %RH. The obtained value was defined as interlayer adhesion strength. The interlayer adhesion strength of the first interface was "unpeelable", and that of the second interface was 1600 g/15 mm. The evaluated results are put together and shown in Table 1.

### Example 2

A 3-kind 5-layer multilayer film was produced by coextrusion in the same manner as in Example 1, other than using linear low-density polyethylene "HARMOREX NF464A" (trade name, an ethylene-1-hexene copolymer polymerized by the gas phase method with a metallocene catalyst, melting point = 124 °C, MFR (at 190°C under a load of 2160 g) = 2.0 g/10 min, density = 0. 918 g/cm³; hereinafter referred to as (c2-2) produced by Japan Polyethylene Corporation instead of (c2-1) in Example 1, to measure the T-type peel strength. The results are shown in Table 1.

### Example 3

A 3-kind 5-layer multilayer film was produced by coextrusion in the same manner as in Example 1, other than using linear low-density polyethylene "ULTZEX 2022L" (trade name, an ethylene-4-methyl-1-pentene copolymer polymerized with a Ziegler catalyst, melting point = 120°C, MFR (at 190°C under a load of 2160 g) = 2.0 g/10 min, density = 0.919 g/cm³; hereinafter referred to as (c2-3)) produced by Prime Polymer Co., Ltd. instead of (c2-1) and using polypropylene "NOVATEC EG7F" (trade name, melting point = 142°C, MFR (at 230°C under a load of 2160 g) = 1.3 g/10 min, density = 0.900 g/cm³; hereinafter referred to as (A-2)) produced by Japan Polypropylene Corporation as a polypropylene instead of (A-1) in Example 1, to measure the T-type peel strength. The results are shown in Table 1.

### Example 4

A 3-kind 5-layer multilayer film was produced by coextrusion in the same manner as in Example 1, other than using linear low-density polyethylene "Kernel KF360T" (trade name, an ethylene-1-hexene copolymer polymerized by the gas phase method with a metallocene catalyst, melting point = 90°C, MFR (at 190°C under a load of 2160 g) = 3.5 g/10 min, density = 0.898 g/cm³; hereinafter referred to as (c2-4) produced by Japan Polyethylene Corporation instead of (c2-1) and using (A-2) as a polypropylene instead of (A-1) in Example 1, to measure the T-type peel strength and the results are shown in Table 1.

### Example 5

A 3-kind 5-layer multilayer film was produced by coextrusion in the same manner as in Example 1, other than using a mixture [(c2-4) / (c2-5) = 50/50 (mass ratio), calculated density: 0.918 g/cm³] of dry blended (c2-4) and linear low-density polyethylene " ULTZEX 4020L" (trade name, an ethylene-4-methyl-1-pentene copolymer polymerized with a Ziegler catalyst, melting point = 126°C, MFR (at 190°C under a load of 2160 g) = 2.3 g/10 min, density = 0.937 g/cm³; hereinafter referred to as (c2-5)) produced by Prime Polymer Co., Ltd. instead of (c2-1) in Example 1, to measure the T-type peel strength. The results are shown in Table 1.

### Example 6

(c2-5) and "TAFMER P0480" (trade name, an ethylene-propylene copolymer, MFR (at 230°C under a load of 2160 g) = 1.8 g/10 min, density = 0.870 g/cm³; hereinafter referred to as (c2-6)) produced by Mitsui Chemicals, Inc. were melt-kneaded and extruded at 200°C at (c2-5) / (c2-6) = 75/25 (mass ratio; calculated density = 0. 920 g/cm³) with a twin-screw segmented extruder having the screw diameters of 25 mmφ to prepare pellets of a mixture of (c2-5) and (c2-6).

A 3-kind 5-layer multilayer film was produced by coextrusion in the same manner as in Example 1, other than using the pellets of the mixture of (c2-5) and (c2-6) instead of (c2-1) in Example 1, to measure the T-type peel strength. The results are shown in Table 1.

### Example 7

A 3-kind 5-layer multilayer film was produced by coextrusion in the same manner as in Example 1, other than modifying the mass ratio of (c1) / (c2-1) as (c1) / (c2-1) = 8/92 in Example 1 to measure the T-type peel strength. The results are shown in Table 1.

### Comparative Example 1

A 3-kind 5-layer multilayer film was produced by coextrusion in the same manner as in Example 1, other than using linear low-density polyethylene "NOVATEC UF641" (trade name, an ethylene-1-hexene copolymer polymerized with a Ziegler catalyst, melting point = 124°C, MFR (at 190°C under a load of 2160 g) = 2.1 g/10 min, density = 0.927 g/cm³; hereinafter referred to as (c2-7)) produced by Japan Polyethylene Corporation instead of (c2-1) in Example 1 to measure the T-type peel strength. The results are shown in Table 1.

### Comparative Example 2

A 3-kind 5-layer multilayer film was produced by coextrusion in the same manner as in Example 1, other than using (c2-5) instead of (c2-1) in Example 1 to measure the T-type peel strength. The results are shown in Table 1.

### Comparative Example 3

A 3-kind 5-layer multilayer film was produced by coextrusion in the same manner as in Example 1, other than using (c2-5) instead of (c2-1) and using (A-2) as a polypropylene instead of (A-1) in Example 1, to measure the T-type peel strength. The results are shown in Table 1.

### Comparative Example 4

A 3-kind 5-layer multilayer film was produced by coextrusion in the same manner as in Example 1, other than using high-pressure low density polyethylene "Suntec L2340" (trade name, melting point = 112°C, MFR (at 190°C under a load of 2160 g) = 3.8 g/10 min, density = 0.923 g/cm³; hereinafter referred to as LDPE) produced by Asahi Kasei Chemicals Corporation, instead of (c2-1) in Example 1, to measure the T-type peel strength. The results are shown in Table 1.

### Comparative Example 5

A 3-kind 5-layer multilayer film was produced by coextrusion in the same manner as in Example 1, other than using (A-2) instead of (c2-1) in Example 1 to measure the T-type peel strength. The results are shown in Table 1.

**Table 1**

| | Polypropylene (A) | | Ethylene-α-olefin copolymer (c2) | | | c1 / c2 (mass ratio) | Interlayer adhesion strength | |
|---|---|---|---|---|---|---|---|---|
| | Type | Melting Point (°C) | Type | Density (g/cm³) | Melting Point (°C) | | PP ^{*1)} (g/15 mm) | EVOH ^{*2)} (g/15 mm) |
| Example 1 | A-1 | 168 | c2-1 | 0.909 | 115 | 4/96 | Unpeelable | 1600 |
| Example 2 | A-1 | 168 | c2-2 | 0.918 | 124 | 4/96 | Unpeelable | 1650 |
| Example 3 | A-2 | 142 | c2-3 | 0.919 | 120 | 4/96 | Unpeelable | 1620 |
| Example 4 | A-2 | 142 | c2-4 | 0.898 | 90 | 4/96 | Unpeelable | 1590 |
| Example 5 | A-1 | 168 | c2-4 / c2-5 = 50/50 | 0.918 ^{*3)} | - ^{*4)} | 4/96 | 1220 | 1490 |
| Example 6 | A-1 | 168 | c2-5 / c2-6 = 75/25 | 0.920 ^{*3)} | - ^{*4)} | 4/96 | 1180 | 1430 |
| Example 7 | A-1 | 168 | c2-1 | 0.909 | 115 | 8/92 | Unpeelable | 1690 |
| Comparative Example 1 | A-1 | 168 | c2-7 | 0.927 | 124 | 4/96 | 250 | 980 |
| Comparative Example 2 | A-1 | 168 | c2-5 | 0.937 | 126 | 4/96 | 220 | 300 |
| Comparative Example 3 | A-2 | 142 | c2-5 | 0.937 | 126 | 4/96 | 170 | 300 |
| Comparative Example 4 | A-1 | 168 | LDPE | 0.923 | 112 | 4/96 | 100 | 160 |
| Comparative Example 5 | A-1 | 168 | Polypropylene A-2 | 0.9 | 142 | 4/96 | Unpeelable | 90 |

| | | | | | | | | |
|---|---|---|---|---|---|---|---|---|
| Polypropylene (A) : A-1: "NOVATEC FY6C" (trade name, produced by Japan Polypropylene Corporation) A-2: "NOVATEC EG7F" (trade name, produced by Japan Polypropylene Corporation) Ethylene-vinyl alcohol copolymer (B): "EVAL H171B" (produced by Kuraray Co., Ltd.) Ethylene-α-olefin copolymer (c2): c2-1: "ULTZEX 1020L" (trade name, ethylene-4-methyl-1-pentene copolymer produced by Prime Polymer Co., Ltd.) c2-2: "HARMOREX NF464A" (trade name, ethylene-1-hexene copolymer produced by Japan Polyethylene Corporation) c2-3: "ULTZEX 2022L" (trade name, ethylene-4-methyl-1-pentene copolymer produced by Prime Polymer Co., Ltd.) c2-4: "Kernel KF360T" (trade name, ethylene-1-hexene copolymer produced by Japan Polyethylene 37 Corporation) c2-5: "ULTZEX 4020L" (trade name, ethylene-4-methyl-1-pentene copolymer produced by Prime Polymer Co., Ltd.) c2-6: "TAFMER P0480" (trade name, ethylene-propylene copolymer produced by Mitsui Chemicals, Inc.) c2-7: "NOVATEC UF641" (trade name, ethylene-1-hexene copolymer produced by Japan Polyethylene Corporation) *1) adhesion strength in the interface between the polypropylene (PP) (A) layer and the adhesive resin composition (C) layer *2) adhesion strength in the interface between the EVOH (B) layer and the adhesive resin composition (C) layer *3) calculated value *4) unmeasured | | | | | | | | |

As seen from Table 1, in Examples 1 to 7 where the adhesive resin compositions (C) were made through mixing the thermoplastic resin (c1) and the ethylene-α-olefin copolymers (c2) having densities of 0.925 g/cm³ or less, good interlayer adhesion strength was exhibited in either interface of the interface between the adhesive resin composition (C) layer and the polypropylene (A) layer and the interface between the adhesive resin composition (C) layer and the ethylene-vinyl alcohol copolymer (B) layer. In contrast, in Comparative Examples 1 to 3 where the ethylene-α-olefin copolymers having densities exceeding 0.925 g/cm³ were used as adhesive resin composition components, the interlayer adhesion strength was severely decreased in either interface. In Comparative Example 4 where LDPE was used as an adhesive resin composition component, the interlayer adhesion strength was even more decreased. Further, in Comparative Example 5 where the polypropylene (A-2) was used as an adhesive resin composition component instead of the ethylene-α-olefin copolymer (c2), although the adhesion was good in the interface between the adhesive resin composition (C) layer and the polypropylene (A) layer, the adhesion in the interface between the adhesive resin composition (C) layer and the ethylene-vinyl alcohol copolymer (B) layer became very poor.

### Example 8

(1) Pellets of the thermoplastic resin (c1) obtained in Synthesis Example 1 and pellets of the ethylene-α-olefin copolymer (c2-1) were dry-blended at (c1) / (c2-1) = 4/96 (mass ratio), yielding a mixture of both pellets.

(2) Next, the polypropylene (A-1), the pellet mixture of (c1) / (c2-1), and "EVAL H171B" produced by Kuraray Co., Ltd. were provided as raw materials and were introduced into separate extruders, respectively. Then, a 3-kind 5-layer multilayer sheet of polypropylene (A) / adhesive resin composition (C) / ethylene-vinyl alcohol copolymer (B) / adhesive resin composition (C) / polypropylene (A) was produced by coextrusion according to the conditions shown below. The thickness distribution of the resulting multilayer sheet was 225/90/90/90/225 µm.

The constitution and operating conditions of the coextrusion machine are as follows.
Extruder 1 [polypropylene (A): (A-1)]:
Instrument: single-screw extruder "GT-32-A type" manufactured by Research Laboratory of Plastic Technology Co., Ltd.
Screw diameter: 32 mmφ
Screw rotation speed: 70 rpm
Cylinder setting temperature: 220°C
Extruder 2 [adhesive resin composition (C): pellet mixture of (c1) / (c2-1)]:
Instrument: single-screw extruder "P25-18AC" manufactured by Osaka Seiki Kosaku Kabushiki Kaisha,
Screw diameter: 25 mmφ
Screw constitution: fullflight
L/D: 18
Screw rotation speed: 70 rpm
Cylinder setting temperature: 220°C
Extruder 3 [ethylene-vinyl alcohol copolymer (B)]:
Instrument: single-screw extruder "Labo ME-type CO-NXT" manufactured by Toyo Seiki Seisaku-sho, Ltd.
Screw diameter: 20 mmφ
Screw rotation speed: 40 rpm
Cylinder setting temperature: 220°C
Die size: 300 mm
Sheet taking-off rate: 1 m/min
Temperature of cooling roll: 60°C

(3) The multilayer sheet obtained in the above (2) was put into a pantographic biaxial stretching machine manufactured by Toyo Seiki Seisaku-sho, Ltd. to carry out biaxial co-stretching. It was stretched at stretching temperatures of 135°C and 105°C, and at stretching ratios of 3.0 x 3.0 times and 2.0 x 2.0 times respectively. In either case, the stretching speed was 1 m/sec.

(4) The T-type peel strength in the interfaces between the polypropylene (A) layer and the adhesive resin composition (C) layer and between the adhesive resin composition (C) layer and the EVOH (B) layer of the resulting multilayer stretched film immediately after the film production was measured with an Autograph (tensile speed = 250 mm/min) at 20°C and 65 %RH. The obtained value was defined as interlayer adhesion strength. The evaluated results are shown in Table 2.

### Example 9

A multilayer sheet was produced in the same manner as in Example 8 (2), other than using the polypropylene (A-2) instead of the polypropylene (A-1) in Example 8. The resulting multilayer sheet was put into a pantographic biaxial stretching machine manufactured by Toyo Seiki Seisaku-sho, Ltd. to carry out biaxial co-stretching at a stretching temperature of 135°C, at a stretching ratio of 3.0 x 3.0 times, and at a stretching speed of 1 m/sec. The resulting multilayer stretched film was evaluated in the same manner as in Example 8 (4). The results are shown in Table 2.

**Table 2**

| | Polypropylene (A) | | Ethylene-α-olefin copolymer (c2) | | | Stretching conditions | | Interlayer adhesion strength | |
|---|---|---|---|---|---|---|---|---|---|
| | Type | Melting point (°C) | Type | Density (g/cm³) | Melting point (°C) | Stretching temperature (°C) | Stretching ratio (times) | PP ^{*1)} (g/15 mm) | EVOH ^{*2)} (g/15 mm) |
| Example 8 | A-1 | 168 | c2-1 | 0.909 | 115 | 135 | 3 x 3 | Unpeelable | 350 |
| | | | | | | 135 | 2 x 2 | Unpeelable | 1000 |
| | | | | | | 105 | 3 x 3 | Unpeelable | 30 |
| | | | | | | 105 | 2 x 2 | Unpeelable | 40 |
| Example 9 | A-2 | 142 | c2-1 | 0.909 | 115 | 135 | 3 x 3 | Unpeelable | 340 |

| | | | | | | | | | |
|---|---|---|---|---|---|---|---|---|---|
| Ethylene-vinyl alcohol copolymer (B) : "EVAL H171B" (product name, produced by Kuraray Co., Ltd.) Adhesive resin composition (C): thermoplastic resin (c1) / ethylene-α-olefin copolymer (c2) = 4/96 (mass ratio) *1) Adhesion strength in the interface between the polypropylene (PP) (A) layer and the adhesive resin composition (C) layer *2) Adhesion strength in the interface between the EVOH (B) layer and the adhesive resin composition (C) layer | | | | | | | | | |

As seen from Table 2, when the stretching temperature was higher than the melting point of the ethylene-α-olefin copolymer (c2), it is understood that the interlayer adhesion strength of the multilayer structure after stretching was good.

### Example 10

(1) Pellets of the thermoplastic resin (c1) obtained in Synthesis Example 1 and pellets of the ethylene-α-olefin copolymer (c2-1) were dry-blended at (c1) / (c2-1) = 4/96 (mass ratio), yielding a mixture of both pellets.

(2) Next, the polypropylene (A-1), the pellet mixture of (c1) / (c2-1), and "EVAL H171B" produced by Kuraray Co., Ltd. were provided as raw materials and were introduced into separate extruders, respectively. Then, a 3-kind 5-layer multilayer sheet of polypropylene (A) / adhesive resin composition (C) / ethylene-vinyl alcohol copolymer (B) / adhesive resin composition (C) / polypropylene (A) was produced by coextrusion according to the conditions shown below. The thickness distribution of the resulting multilayer sheet was 200/50/50/50/200 µm.

The constitution and operating conditions of the coextrusion machine are as follows.
Extruder 1 [polypropylene (A): (A-1)]:
Instrument: single-screw extruder "GT-32-A type" manufactured by Research Laboratory of Plastic Technology Co., Ltd.
Screw diameter: 32 mmφ
Screw rotation speed: 70 rpm
Cylinder setting temperature: 220°C
Extruder 2 [adhesive resin composition (C): pellet mixture of (c1) / (c2-1)]:
Instrument: single-screw extruder "P25-18AC" manufactured by Osaka Seiki Kosaku Kabushiki Kaisha,
Screw diameter: 25 mmφ
Screw constitution: fullflight
L/D: 18
Screw rotation speed: 70 rpm
Cylinder setting temperature: 220°C
Extruder 3 [ethylene-vinyl alcohol copolymer (B)]:
Instrument: single-screw extruder "Labo ME-type CO-NXT" manufactured by Toyo Seiki Seisaku-sho, Ltd.
Screw diameter: 20 mmφ
Screw rotation speed: 40 rpm
Cylinder setting temperature: 220°C
Die size: 300 mm
Sheet taking-off rate: 1 m/min
Temperature of cooling roll: 60°C

(3) The resulting multilayer sheet was thermoformed in a thermoformer (manufactured by Asano Laboratories Co., Ltd.: a vacuum pressure deep drawing shaping machine, type FX-0431-3) at a sheet temperature of 130°C using compressed air (atomospheric pressure of 5 kgf/cm²) into the form of a round cup (die form: upper portion = 75 mmφ, lower portion = 60 mmφ, depth = 75 mm, drawn ratio S = 1.0), yielding a thermoformed container. The shaping conditions are shown below.
Temperature of heater: 400°C
Plug: 45 φ x 65 mm
Temperature of plug: 130°C
Temperature of die: 70°C

(4) The resulting thermoformed article of deep drawing was cut to a width of 15 mm in the direction of drawing, and then the T-type peel strength in the interfaces between the polypropylene (A) layer and the adhesive resin composition (C) layer and between the adhesive resin composition (C) layer and the ethylene-vinyl alcohol copolymer (B) layer on a side face immediately after thermoforming was measured with an Autograph (tensile speed = 250 mm/min) at 20°C and 65 %RH. The obtained value was defined as interlayer adhesion strength. The evaluated results are shown in Table 3.

### Comparative Example 6

The testing was carried out in the same manner as in Example 7, other than using the ethylene-α-olefin copolymer (c2-5) instead of the ethylene-α-olefin copolymer (c2-1) in Example 10. The results are shown in Table 3.

**Table 3**

| | Polypropylene (A) | | Ethylene-α-olefin copolymer (c2) | | | Thermoforming conditions | | Interlayer adhesion strength | |
|---|---|---|---|---|---|---|---|---|---|
| | Type | Melting point (°C) | Type | Density (g/cm³) | Melting point (°C) | Temperature of shaping (°C) | Drawn ratio (S) | PP ^{*1)} (g/15 mm) | EVOH ^{*2)} (g/15 mm) |
| Example 10 | A-1 | 168 | c2-1 | 0.909 | 115 | 130 | 1 | unpeelable | 850 |
| Comparative Example 6 | A-1 | 168 | c2-5 | 0.937 | 126 | 130 | 1 | unpeelable | 240 |

| | | | | | | | | | |
|---|---|---|---|---|---|---|---|---|---|
| Ethylene-vinyl alcohol copolymer (B) : "EVAL H171B" (product name, produced by Kuraray Co., Ltd.) Adhesive resin composition (C): thermoplastic resin (c1) / ethylene-α-olefin copolymer (c2) = 4/96 (mass ratio) *1) adhesion strength in the interface between the polypropylene (PP) (A) layer and the adhesive resin composition (C) layer *2) adhesion strength in the interface between the EVOH (B) layer and the adhesive resin composition (C) layer | | | | | | | | | |

As seen from Table 3, in Example 10 where the adhesive resin composition (C) was made by mixing the thermoplastic resin (c1) and the ethylene-α-olefin copolymer (c2) having a density of 0.925 g/cm³ or less, good interlayer adhesion strength was exhibited even after thermoforming in either interface of the interface between the adhesive resin composition (C) layer and the polypropylene (A) layer and the interface between the adhesive resin composition (C) layer and the ethylene-vinyl alcohol copolymer (B) layer. In contrast, in Comparative Example 6 where the ethylene-α-olefin copolymer having a density exceeding 0.925 g/cm³ was used, the interlayer adhesion strength was severely decreased in the interface between the adhesive resin composition (C) layer and the ethylene-vinyl alcohol copolymer (B) layer.

## Claims

1. A multilayer structure comprising a layer of a polypropylene (A) and a layer of an ethylene-vinyl alcohol copolymer (B) laminated to each other via a layer of an adhesive resin composition (C), wherein the adhesive resin composition (C) contains a thermoplastic resin (c1), having functional groups of at least one kind selected from the group consisting of a boronic acid group and boron-containing groups capable of being converted into a boronic acid group in the presence of water, and an ethylene-α-olefin copolymer (c2), having a density of 0.925 g/cm³ or less and not having the functional groups.

2. The multilayer structure according to claim 1, wherein the functional groups contained in the thermoplastic resin (c1) are cyclic boronate ester groups.

3. The multilayer structure according to claim 1 or 2, wherein the thermoplastic resin (c1) is a hydrogenation product of a styrene-diene block copolymer.

4. The multilayer structure according to any one of claims 1 to 3, wherein the thermoplastic resin (c1) is contained 1 to 20 parts by mass in terms of 100 parts by mass of the ethylene-α-olefin copolymer (c2).

5. The multilayer structure according to any one of claims 1 to 4, wherein the multilayer structure is a shaped article of secondary processing.

6. The multilayer structure according to claim 5, wherein the multilayer structure is a stretched film.

7. The multilayer structure according to claim 5, wherein the multilayer structure is a thermoformed article.

8. A method for producing a multilayer structure according to any one of claims 5 to 7, comprising coextruding or coinjecting the polypropylene (A), the ethylene-vinyl alcohol copolymer (B), and the adhesive resin composition (C), and then performing secondary processing at a temperature of a melting point of the ethylene-α-olefin copolymer (c2) or higher.

## Patentansprüche

1. Mehrschichtstruktur, umfassend eine Schicht aus einem Polypropylen (A) und eine Schicht aus einem Ethylen-Vinylalkohol-Copolymer (B), welche miteinander über eine Schicht aus einer Klebharzzusammensetzung (C) laminiert sind, wobei die Klebharzzusammensetzung (C) ein thermoplastisches Harz (c1) mit funktionellen Gruppen von mindestens einer Art, ausgewählt aus der Gruppe, bestehend aus einer Borsäuregruppe und Bor-enthaltenden Gruppen, die befähigt sind, in Anwesenheit von Wasser in eine Borsäuregruppe umgewandelt zu werden, und ein Ethylen-α-Olefin-Copolymer (c2), welches eine Dichte von 0,925 g/cm³ oder weniger aufweist und nicht die funktionellen Gruppen aufweist, enthält.

2. Mehrschichtstruktur nach Anspruch 1, wobei die in dem thermoplastischen Harz (c1) enthaltenen funktionellen Gruppen cyclische Boronatestergruppen sind.

3. Mehrschichtstruktur nach Anspruch 1 oder 2, wobei das thermoplastische Harz (c1) ein Hydrierungsprodukt eines Styrol-Dien-Blockcopolymers ist.

4. Mehrschichtstruktur nach einem der Ansprüche 1 bis 3, wobei das thermoplastische Harz (c1) in 1 bis 20 Massenteilen bezogen auf 100 Massenteile des Ethylen-α-Olefin-Copolymers (c2) enthalten ist.

5. Mehrschichtstruktur nach einem der Ansprüche 1 bis 4, wobei die Mehrschichtstruktur ein geformter Gegenstand eines Sekundärprozeßes ist.

6. Mehrschichtstruktur nach Anspruch 5, wobei die Mehrschichtstruktur eine gestreckte Folie ist.

7. Mehrschichtstruktur nach Anspruch 5, wobei die Mehrschichtstruktur ein Thermoform-Gegenstand ist.

8. Verfahren zum Herstellen einer Mehrschichtstruktur nach einem der Ansprüche 5 bis 7, umfassend das Coextrudieren oder Coinjizieren des Polypropylens (A), des Ethylen-Vinylalkohol-Copolymers (B) und der Klebharzzusammensetzung (C), und dann das Durchführen des Sekundärprozeßes bei einer Temperatur eines Schmelzpunktes des Ethylen-α-Olefin Copolymers-(c2) oder höher.

## Revendications

1. Structure multicouches comprenant une couche de polypropylène (A) et une couche de copolymère d'éthylène - alcool vinylique (B) stratifiées l'une sur l'autre par l'intermédiaire d'une couche de composition de résine adhésive (C), dans laquelle la composition de résine adhésive (C) contient une résine thermoplastique (cl) possédant des groupes fonctionnels d'au moins un type choisi dans le groupe constitué par un groupe acide boronique et des groupes contenant du bore capables d'être convertis en groupe acide boronique en présence d'eau, et un copolymère d'éthylène - α-oléfine (c2) ayant une masse volumique inférieure ou égale à 0,925 g/cm³ et ne contenant pas les groupes fonctionnels.

2. Structure multicouches selon la revendication 1, dans laquelle les groupes fonctionnels contenus dans la résine thermoplastique (cl) sont des groupes esters cycliques de boronate.

3. Structure multicouches selon la revendication 1 ou 2, dans laquelle la résine thermoplastique (c1) est un produit issu de l'hydrogénation d'un copolymère séquencé de styrène - diène.

4. Structure multicouches selon l'une quelconque des revendications 1 à 3, dans laquelle la résine thermoplastique (cl) est contenue en une proportion de 1 à 20 parties en poids en terme de 100 parties en poids du copolymère d'éthylène - α-oléfine (c2).

5. Structure multicouches selon l'une quelconque des revendications 1 à 4, dans laquelle la structure multicouches est un article façonné issu d'un traitement secondaire.

6. Structure multicouches selon la revendication 5, dans laquelle la structure multicouches est un film étiré.

7. Structure multicouches selon la revendication 5, dans laquelle la structure multicouche est un article thermoformé.

8. Procédé de production d'une structure multicouches selon l'une quelconque des revendications 5 à 7, comprenant la co-extrusion ou la co-injection du polypropylène (A), du copolymère d'éthylène - alcool vinylique (B) et de la composition de résine adhésive (C), puis la mise en oeuvre d'un traitement secondaire à une température supérieure ou égale au point de fusion du copolymère d'éthylène - α-oléfine (c2).
